# EUROPÄISCHE PATENTANMELDUNG

(11) **EP 4 470 748 A1**
(43) Veröffentlichungstag der Anmeldung: **04.12.2024**
(21) Anmeldenummer: 23176999.3
(22) Anmeldetag: 02.06.2023
(51) Int. Cl.: B29C 48/76, B29C 48/92, H01M 4/88, B29B 7/84, B29C 48/154

(54) **ANLAGE UND VERFAHREN ZUR HERSTELLUNG EINES BESCHICHTUNGSGEMISCHS, BESCHICHTUNGSGEMISCH, ELEKTRODE UND BATTERIEZELLE**

(71) Anmelder: Coperion GmbH, 70469 Stuttgart (DE)
(72) Erfinder: KAISER, Jasmin, 70374 Stuttgart (DE); ALBRECHT, Sebastian, 71691 Freiberg am Neckar (DE); ARNOLD, Maximilian, 70178 Stuttgart (DE)
(74) Vertreter: Ege Lee & Roider Patentanwälte

(57) **Zusammenfassung**

Anlage (100, 200, 300) und Verfahren zur Herstellung eines homogenisierten Beschichtungsgemischs für eine Elektrode einer Batteriezelle, wobei die Anlage (100, 200, 300) umfasst eine Extrusionseinrichtung (102) zum Herstellen des homogenen Beschichtungsgemischs; eine Übergabestelle (106) zum Bereitstellen des von der Extrusionseinrichtung (102) homogenisierten Beschichtungsgemischs; und eine der Extrusionseinrichtung (102) nachgeschaltete und der Übergabestelle (106) vorgeschaltete Entgasungseinrichtung (104), die zum kontinuierlichen Entgasen des von der Extrusionseinrichtung (102) homogenisierten Beschichtungsgemischs ausgebildet ist, sowie Beschichtungsgemisch, Elektrode und Batteriezelle.

## Beschreibung

Die Erfindung betrifft eine Anlage und ein Verfahren zur Herstellung eines Beschichtungsgemischs für eine Elektrode einer Batteriezelle. Außerdem betrifft die Erfindung ein Beschichtungsgemisch, eine Elektrode und eine Batteriezelle.

Für den Antrieb von Fahrzeugen werden vermehrt Batterien, beispielsweise Lithium-Ionen-Batterien eingesetzt. Üblicherweise sind die Batterien aus Zellen zusammengesetzt, wobei jede Zelle eine Anode, Kathode und einen dazwischen angeordneten Separator aufweist. Bei der Herstellung einer Batteriezelle wird ein Trägermaterial, zum Beispiel eine Trägerfolie, mit einer sogenannten Slurry beschichtet. Unter einer Slurry wird ein, insbesondere homogenes, Beschichtungsgemisch, beispielsweise eine Beschichtungspaste, verstanden. Die Slurry besteht aus mehreren Komponenten, u.a. einem Aktivmaterial, das entweder für die Anode oder für die Kathode einer Batteriezelle spezifisch ist. Nach der durchgeführten Beschichtung erfolgt in der Regel ein Trocknungsprozess, bei dem sich die Slurryschicht fest mit dem Trägermaterial verbindet.

Die einzelnen Komponenten der Slurry werden beispielsweise mittels eines Extruders zu einer homogenisierten Slurry vermischt. Um eine nachgelagerte homogene Applikation auf dem Trägermaterial zu gewährleisten, muss die extrudierte Slurry zusätzlich entgast werden. Dies erfolgt üblicherweise mit Hilfe von zusätzlichen Entgasungstanks, in die die Slurry nach dem Extrudieren gefüllt und innerhalb einer bestimmten Verweilzeit entgast wird. Die Weiterleitung des Slurries zu einer Beschichtungseinrichtung wird dadurch unterbrochen. Nachteilig hieran ist, dass die Entgasungstanks hohe Kosten verursachen und viel Platz benötigen. Auch ein erhöhter Reinigungs- und Wartungsaufwand ist notwendig. Die Entgasungsprozesszeit ist bei Entgasungstanks relativ hoch, sodass überhaupt eine hinreichende Entgasung erfolgen kann.

Aus dem Dokument DE 10 2004 012 476 A1 ist beispielsweise ein Verfahren zum Herstellen einer Lithium-Polymer-Zelle bekannt, bei dem eine Elektrodenmasse extrudiert wird.

Der Erfindung liegt die Aufgabe zugrunde, eine eingangs genannte Anlage zur Herstellung eines Beschichtungsgemischs für eine Elektrode strukturell und/oder funktionell zu verbessern. Außerdem liegt der Erfindung die Aufgabe zugrunde, ein eingangs genanntes Verfahren zur Herstellung eines Beschichtungsgemischs für eine Elektrode strukturell und/oder funktionell zu verbessern. Ferner liegt der Erfindung die Aufgabe zugrunde, ein eingangs genanntes Beschichtungsgemisch, eine eingangs genannte Elektrode und eine eingangs genannte Batteriezelle strukturell und/oder funktionell zu verbessern.

Beispielsweise ist es eine Aufgabe der vorliegenden Erfindung, eine Anlage und ein Verfahren zur Herstellung eines Beschichtungsgemischs für eine Elektrode bereitzustellen, welches die im Zusammenhang mit dem Stand der Technik aufgezeigten Probleme reduzieren bzw. beseitigen kann. Insbesondere ist es eine Aufgabe der vorliegenden Erfindung, die Entgasungsprozesszeit signifikant zu verkürzen und/oder einen kontinuierlichen Prozess zu ermöglichen. Trotzdem soll ein im Wesentlichen blasenfreies Beschichtungsgemisch für eine Elektrode bereitgestellt werden können, um insbesondere Gas- und/oder Luft-Einschlüsse in der Elektrodenbeschichtung und damit Fehlstellen auf der Elektrode zu vermeiden.

Die Aufgabe wird gelöst mit einer Anlage mit den Merkmalen des Anspruchs 1. Außerdem wird die Aufgabe gelöst mit einem Verfahren mit den Merkmalen des Anspruchs 10. Ferner wird die Aufgabe gelöst mit einem Beschichtungsgemisch mit den Merkmalen des Anspruchs 15, einer Elektrode mit den Merkmalen des Anspruchs 16 und/oder einer Batteriezelle mit den Merkmalen des Anspruchs 17. Vorteilhafte Ausführungen und/oder Weiterbildungen sind Gegenstand der Unteransprüche, der Beschreibung und/oder den begleitenden Figuren. Insbesondere können die unabhängigen Ansprüche einerAnspruchskategorie auch analog zu den abhängigen Ansprüchen einer anderen Anspruchskategorie weitergebildet und/oder kombiniert sein. Ebenso können nachfolgend beschriebene Vorrichtungs- und Verfahrensmerkmale miteinander kombiniert und/oder weitergebildet werden.

Ein Aspekt betrifft eine Anlage zur Herstellung eines Beschichtungsgemischs. Die Anlage weist insbesondere eine Extrusionseinrichtung, eine Entgasungseinrichtung und eine Übergabestelle auf. Das Beschichtungsgemisch kann ein homogenisiertes Beschichtungsgemisch sein. Die Anlage kann zu Herstellung eines homogenisierten Beschichtungsgemisch ausgebildet sein. Insbesondere kann die Anlage zur Herstellung eines Beschichtungsgemischs für eine Elektrode einer Batteriezelle ausgebildet sein. Das Beschichtungsgemisch kann eine Beschichtungspaste, beispielsweise ein sogenanntes Slurry, sein. Das Beschichtungsgemisch kann ein Anodenmaterial oder Kathodenmaterial für eine Elektrode einer Batteriezelle sein. Die Batteriezelle kann beispielsweise eine Lithium-lonen-Batteriezelle sein. Das Beschichtungsgemisch kann ein Aktivmaterial umfassen. Das Aktivmaterial kann für eine Anode bzw. Kathode spezifisch sein. Zusätzlich kann das Beschichtungsgemisch einen Binder und/oder ein Lösungsmittel und/oder ein leitfähiges Material umfassen.

Die Extrusionseinrichtung ist vorzugweise zum Herstellen und/oder Mischen und/oder Homogenisieren des Beschichtungsgemischs ausgebildet. Die Extrusionseinrichtung kann eine Schneckenmaschine, beispielsweise eine Mehrwellenschneckenmaschine, aufweisen. Die Mehrwellenschneckenmaschine kann als gleichsinnig oder gegensinnig drehangetriebene und/oder dicht kämmende Mehrwellen-Schneckenmaschine ausgebildet sein. Vorzugsweise kann die Mehrwellenschneckenmaschine als eine Zweiwellen-Schneckenmaschine ausgebildet sein. Die Mehrwellenschneckenmaschine kann insbesondere ein Doppelschneckenextruder sein. Somit kann die Mehrwellenschneckenmaschine zumindest zwei in einem Gehäuse gelagerte Behandlungselement-Wellen zum Mischen und/oder Homogenisieren der zugeführten Komponenten des Beschichtungsgemischs umfassen. Die zumindest zwei Behandlungselement-Wellen können zum Mischen und/oder Homogenisieren der zugeführten Komponenten zu einem Beschichtungsgemisch ausgebildet sein. Die zumindest zwei Behandlungselement-Wellen können Extruderschnecken sein. Das Gehäuse kann ein Zylindergehäuse sein, in dem die zumindest zwei Behandlungselement-Wellen aufgenommen sind. Zum Zuführen der Komponenten des Beschichtungsgemischs in die Mehrwellenschneckenmaschine kann die Mehrwellenschneckenmaschine zumindest eine Zuführöffnung aufweisen. In einer Variante kann an der Mehrwellenschneckenmaschine eine Austragsdüse zum Austragen des gemischten und/oder homogenisierten Beschichtungsgemischs vorgesehen sein.

Die Übergabestelle kann zum Bereitstellen des von der Extrusionseinrichtung homogenisierten und/oder extrudierten Beschichtungsgemischs ausgebildet sein. Die Übergabestelle kann eine Übergabeeinrichtung sein. In einer Variante ist die Übergabestelle dazu ausgebildet, das Beschichtungsgemisch einer Beschichtungseinrichtung bereitzustellen bzw. an diese zu übergeben. Dabei kann die Bereitstellung und/oder Übergabe kontinuierlich erfolgen. Ferner kann die Anlage die Beschichtungseinrichtung umfassen. Die Beschichtungseinrichtung kann zum Beschichten eines Trägermaterials, beispielsweise einer Trägerfolie, mit dem bereitgestellten Beschichtungsgemisch ausgebildet sein. Die Beschichtungseinrichtung kann ein Auftragswerkzeug sein oder umfassen. Beispielsweise kann die Beschichtungseinrichtung einen Beschichtungskopf und/oder einen Beschichter aufweisen.

Gemäß einer bevorzugten Variante ist die Entgasungseinrichtung der Extrusionseinrichtung nachgeschaltet und der Übergabestelle vorgeschaltet. D.h., die Entgasungseinrichtung ist, in Förderrichtung gesehen, zwischen der Extrusionseinrichtung und der Übergabestelle vorgesehen, insbesondere so, dass eine Entgasung des extrudierten Beschichtungsgemischs vor dem Erreichen der Übergabestelle durchführbar ist. Die Entgasungseinrichtung kann dabei zum kontinuierlichen Entgasen des von der Extrusionseinrichtung homogenisierten und/oder extrudierten Beschichtungsgemischs ausgebildet sein. Beispielsweise kann die Entgasungseinrichtung eine Inline-Entgasungseinrichtung und/oder eine Vakuum-Entgasungseinrichtung sein. Vorzugsweise kann die Entgasungseinrichtung eine vakuumfähige Prozesskammer aufweisen, die im Betrieb der Entgasungseinrichtung unter Vakuum setzbar ist.

In einer Variante ist die Entgasungseinrichtung der Extrusionseinrichtung unmittelbar nachgeschaltet. Hierbei kann die Entgasungseinrichtung also direkt nach dem Ausgang der Extrusionseinrichtung vorgesehen sein. Die Einbindung der Entgasungseinrichtung direkt hinter der Extrusionseinrichtung begünstigt die Förderung des Beschichtungsgemischs durch eine anschließende längere Förderleitung aufgrund der niedrigeren Viskosität des Beschichtungsgemischs nach der Entgasung. Alternativ kann die Entgasungseinrichtung der Übergabestelle unmittelbar vorgeschaltet sein. Hierbei kann die Entgasungseinrichtung also direkt vor der Übergabestelle vorgesehen sein. Dadurch kann die Entgasungseinrichtung auch direkt vor der Beschichtungseinrichtung wirksam angeordnet sein. Eine Einbindung der Entgasungseinrichtung direkt vor der Übergabestelle bzw. direkt vor der Beschichtungseinrichtung kann ermöglichen, dass das Beschichtungsgemisch vollständig entgast und/oder ohne Neueinbringung von Gas bzw. Luft appliziert werden kann.

Die Anlage kann zumindest eine Förderleitung aufweisen. Die Extrusionseinrichtung, insbesondere der Ausgang der Extrusionseinrichtung, kann über die Förderleitung mit der Übergabestelle verbunden sein. Die Anlage kann ausgebildet sein, das extrudierte Beschichtungsgemisch über die Förderleitung zu der Übergabestelle zu transportieren bzw. zu dieser zu fördern. Das Fördern kann dabei kontinuierlich erfolgen. In der Förderleitung kann zumindest eine Pumpe, wie Förderpumpe, vorgesehen sein. In einer bevorzugten Variante ist die Entgasungseinrichtung in die Förderleitung wirksam eingebunden bzw. integriert, beispielsweise so, dass das von der Extrusionseinrichtung extrudierte Beschichtungsgemisch, insbesondere kontinuierlich, entgast wird bevor es die Übergabestelle erreicht.

In einer Variante kann zwischen der Extrusionseinrichtung und der Übergabestelle ein Puffertank zum Zwischenspeichern des Beschichtungsgemischs vorgesehen sein. Der Pufferspeicher kann kontinuierlich befüllt werden bzw. kontinuierlich befüllbar ausgebildet sein. Der Puffertank kann in die Förderleitung wirksam eingebunden bzw. integriert sein. Die Entgasungseinrichtung kann dem Puffertank, beispielsweise unmittelbar, vorgeschaltet oder, beispielsweise unmittelbar, nachgeschaltet sein. D.h., die Entgasungseinrichtung kann direkt vor oder direkt nach dem Puffertank vorgesehen sein. Ferner kann an dem Puffertank ein Rezirkulationskreislauf vorgesehen sein. Der Rezirkulationskreislauf kann eine Rückführleitung aufweisen, die einen Ausgang des Puffertanks mit einem Eingang des Puffertanks verbindet. Ferner kann der Rezirkulationskreislauf eine Pumpe, wie Förderpumpe, aufweisen. In einer Variante kann die Entgasungseinrichtung in den Rezirkulationskreislauf integriert sein. Eine Einbindung direkt am Puffertank ermöglicht eine Entgasung mit gleichzeitiger Rezirkulierung, um gleichzeitig einer Sedimentation des Beschichtungsgemischs im Puffertank vorzubeugen.

Die Anlage kann ferner ausgebildet sein, den Durchsatz der Extrusionseinrichtung und/oder der Entgasungseinrichtung und/oder der Übergabestelle zu steuern. Hierzu kann die Entgasungseinrichtung in ihrem Durchsatz steuerbar ausgebildet sein. Der Durchsatz der Entgasungseinrichtung kann beispielsweise durch Steuerung bzw. Einstellung des Vakuums der Entgasungseinrichtung gesteuert werden. Zusätzlich oder alternativ kann der Durchsatz der Entgasungseinrichtung über die Pumpe, wie Förderpumpe, in der Förderleitung gesteuert werden. Auch die Übergabestelle kann in ihrem Durchsatz steuerbar ausgebildet sein. Zusätzlich oder alternativ kann die Beschichtungseinrichtung in ihrem Durchsatz steuerbar ausgebildet sein. Ferner kann die Extrusionseinrichtung bzw. dessen Mehrwellenschneckenmaschine in ihrem Durchsatz steuerbar ausgebildet sein.

In einer Variante kann die Anlage ausgebildet sein, den Durchsatz der Entgasungseinrichtung basierend auf dem Durchsatz der Extrusionseinrichtung und/oder basierend auf dem Durchsatz der Übergabestelle zu steuern. Die Anlage kann auch ausgebildet sein, den Durchsatz der Entgasungseinrichtung basierend auf dem Durchsatz der Beschichtungseinrichtung zu steuern. Bei einer relativ geringen Länge, zum Beispiel kleiner 1 m Länge, der Förderleitung zwischen Extrusionseinrichtung und Entgasungseinrichtung kann in diesem Förderleitungsabschnitt auf eine Pumpe verzichtet werden. In diesem Fall kann der von der Entgasungseinrichtung erzeugte Fördersog ausreichend sein, um das Beschichtungsgemisch zur und/oder durch die Entgasungseinrichtung zu fördern. Die Entgasungsleistung kann dem Durchsatz der Extrusionseinrichtung und/oder dem Durchsatz der Übergabestelle bzw. der Beschichtungseinrichtung entsprechen und/oder von diesem abhängen.

Die Anlage kann zur Steuerung des oder der Durchsätze eine Steuereinrichtung aufweisen. Die Steuereinrichtung kann beispielsweise ein zentrales oder dezentrales Steuergerät sein. Bei der Steuereinrichtung kann es sich um die Steuereinrichtung der Extrusionseinrichtung oder um eine gesonderte bzw. zusätzliche Steuereinrichtung handeln.

Die Anlage und/oder die Steuereinrichtung kann eingerichtet sein, zu erkennen, ob der Puffertank im Wesentlichen leer, halbvoll und/oder voll ist. Dabei kann die Anlage und/oder die Steuereinrichtung eingerichtet sein, den Durchsatz der Extrusionseinrichtung zu erhöhen, wenn erkannt wird, dass der Puffertank im Wesentlichen leer ist. Zusätzlich oder alternativ kann die Anlage und/oder die Steuereinrichtung eingerichtet sein, in diesem Fall den Durchsatz der Übergabestelle und/oder der Beschichtungseinrichtung zu verringern oder die Beschichtungseinrichtung abzustellen. Die Anlage und/oder die Steuereinrichtung kann auch eingerichtet sein, den Durchsatz der Extrusionseinrichtung zu verringern, wenn erkannt wird, dass der Puffertank im Wesentlichen voll ist. Zusätzlich oder alternativ kann die Anlage und/oder die Steuereinrichtung eingerichtet sein, in diesem Fall den Durchsatz der Übergabestelle und/oder der Beschichtungseinrichtung zu erhöhen oder die Extrusionseinrichtung abzustellen. In einem optimalen Betriebsbereich kann der Puffertank im Wesentlichen halbvoll sein. Die Anlage und/oder die Steuereinrichtung kann daher eingerichtet sein, den oder die Durchsätze im Wesentlichen beizubehalten und/oder derart zu steuern, dass der Puffertank im Wesentlichen halbvoll bleibt. Dabei kann die Anlage und/oder die Steuereinrichtung eingerichtet sein, eine Ausfallwahrscheinlichkeit zu ermitteln und/oder zu berücksichtigen.

Ferner kann die Anlage und/oder die Steuereinrichtung verschiedene Steuermodi, beispielsweise für einen Störungsbetrieb aufweisen. Als Störungsbetriebmodi kann/können beispielsweise ein Störungsbetrieb bei einem Ausfall der Extrusionseinrichtung, der Entgasungseinrichtung und/oder der Beschichtungseinrichtung vorgesehen sein. Die Anlage und/oder die Steuereinrichtung kann eingerichtet sein, bei einem Ausfall der Entgasungseinrichtung und/oder bei einem Ausfall der Extrusionseinrichtung und/oder bei einem Ausfall der Beschichtungseinrichtung, eine vollständige Abschaltung (Komplettabschaltung) durchzuführen, beispielsweise eine Abschaltung der Extrusionseinrichtung, der Entgasungseinrichtung, des Puffertanks bzw. dessen Rezirkulationskreislaufs und/oder der Beschichtungseinrichtung. Zusätzlich oder alternativ kann die Anlage und/oder die Steuereinrichtung eingerichtet sein, bei einem Ausfall der Extrusionseinrichtung, zunächst den Puffertank leerzufahren und anschließend eine Abschaltung, z.B. Komplettabschaltung, durchzuführen. Ferner kann die Anlage und/oder die Steuereinrichtung eingerichtet sein, bei einem Ausfall der Beschichtungseinrichtung, die Extrusionseinrichtung abzuschalten und/oder den Rezirkulationskreislauf zu aktivieren oder weiter zu betreiben. Die Anlage und/oder die Steuereinrichtung kann auch eingerichtet sein, bei einem Ausfall der Beschichtungseinrichtung, den Durchsatz der Extrusionseinrichtung im Wesentlichen unverändert beizubehalten oder zu verringern, bis der Puffertank im Wesentlichen voll ist.

Ein weiterer Aspekt betrifft ein Verfahren zur Herstellung eines homogenisierten Beschichtungsgemischs für eine Elektrode einer Batteriezelle. Das Beschichtungsgemisch kann eine Beschichtungspaste, beispielsweise ein sogenanntes Slurry, sein. Das Beschichtungsgemisch kann ein Anodenmaterial oder Kathodenmaterial sein. Das Anodenmaterial oder Kathodenmaterial kann für eine Elektrode einer Batteriezelle sein. Die Batteriezelle kann beispielsweise eine Lithium-lonen-Batteriezelle sein. Das Beschichtungsgemisch kann mehrere Komponenten umfassen bzw. aus diesen hergestellt werden. Insbesondere umfasst das Beschichtungsgemisch ein Aktivmaterial. Das Aktivmaterial kann für eine Anode bzw. Kathode spezifisch sein. Beispielsweise kann das Aktivmaterial Graphit (z.B. für die Anode) oder ein Lithium-Nickel-Mangan-Kobalt-Oxid (z.B. für die Kathode) sein. Zusätzlich kann das Beschichtungsgemisch einen Binder und/oder ein Lösungsmittel (z.B. ein organisches oder auf Wasser basierendes Lösungsmittel) und/oder ein leitfähiges Material (z.B. Kohlenstoff oder Leitruß) umfassen. Ferner kann das Beschichtungsgemisch ein oder mehrere Additive aufweisen.

Bei dem Verfahren können die Komponenten für das Beschichtungsgemisch zunächst in die Extrusionseinrichtung, insbesondere in dessen Mehrwellenschneckenmaschine zugeführt werden. Das Zuführen der Komponenten kann beispielsweise mittels einer oder mehreren Zuführvorrichtungen und/oder Dosiereinrichtungen erfolgen. Dabei kann das Zuführen kontinuierlich und/oder dosiert erfolgen. Beispielsweise kann das Zuführen der Komponenten über eine Zuführöffnung der Mehrwellenschneckenmaschine erfolgen. In einer Variante kann die Zuführöffnung eine Haupt-Zuführöffnung, z.B. Haupt-Einlauf, der Mehrwellenschneckenmaschine sein.

Die zugeführten Komponenten können mittels der Extrusionseinrichtung bzw. dessen Mehrwellenschneckenmaschine vermischt und/oder dispergiert und/oder homogenisiert werden, insbesondere zu dem Beschichtungsgemisch. Dies kann durch die Behandlungselement-Wellen der Mehrwellenschneckenmaschine erfolgen. Beispielsweise kann dabei zumindest ein Aktivmaterial, ein Binder und ein Lösungsmittel mittels der Extrusionseinrichtung zum Herstellen des Beschichtungsgemischs vermischt werden.

Bei dem Verfahren kann das Beschichtungsgemisch mittels der Extrusionseinrichtung bzw. dessen Mehrwellenschneckenmaschine homogenisiert werden. Sodann kann das, insbesondere homogenisierte, Beschichtungsgemisch aus der Extrusionseinrichtung und/oder dessen Mehrwellenschneckenmaschine herausgeführt bzw. extrudiert, beispielsweise kontinuierlich herausgeführt bzw. extrudiert, werden.

Das extrudierte Beschichtungsgemisch kann dann, beispielsweise über eine Förderleitung, einer Entgasungseinrichtung zugeführt werden. Das Zuführen kann kontinuierlich erfolgen. Mittels der Entgasungseinrichtung kann das homogenisierte und/oder extrudierte Beschichtungsgemisch kontinuierlich entgast werden.

Das entgaste Beschichtungsgemisch kann dann bereitgestellt werden, insbesondere für die Ausbildung einer Elektrode und/oder zur Beschichtung eines Trägermaterial mit dem entgasten Beschichtungsgemisch. Das Bereitstellen kann an eine Beschichtungseinrichtung, beispielsweise zum Beschichten eines Trägermaterial für eine Elektrode einer Batteriezelle, erfolgen. Sodann kann ein Beschichten des Trägermaterials mit dem entgasten und/oder bereitgestellten Beschichtungsgemisch erfolgen. Das Trägermaterial kann beispielsweise eine Trägerfolie, wie Elektrodenfolie, sein. Das Trägermaterial kann elektrisch leitfähig sein. Beispielsweise kann das Trägermaterial eine Kupferfolie (z.B., für eine Anode) oder eine Aluminiumfolie (z.B. für eine Kathode), sein. Das Trägermaterial kann beispielsweise einen Stromableiter der Batteriezelle bilden.

In einer Ausführungsvariante kann das Beschichtungsgemisch unmittelbar nach dem Extrudieren oder unmittelbar vor dem Bereitstellen entgast werden. In einer alternativen Variante kann das Beschichtungsgemisch unmittelbar nach einem Puffertank entgast werden.

Ein weiterer Aspekt betrifft ein Beschichtungsgemisch für eine Elektrode einer Batteriezelle. Das Beschichtungsgemisch kann eine Beschichtungspaste, beispielsweise ein sogenanntes Slurry, sein. Das Beschichtungsgemisch kann ein Anodenmaterial oder Kathodenmaterial für eine Elektrode einer Batteriezelle sein. Zum Beispiel kann das Beschichtungsgemisch ein Lithium-Ionen-Batterie Slurry sein. Das Beschichtungsgemisch kann durch das vorstehend und/oder nachfolgend beschriebene Verfahren und/oder mittels der vorstehend und/oder nachfolgend beschriebenen Anlage hergestellt sein oder werden.

Ein weiterer Aspekt betrifft eine Elektrode für eine Batteriezelle. Die Elektrode kann eine Anode oder Kathode sein. Die Elektrode kann ein Trägermaterial aufweisen. Das Trägermaterial kann mit dem vorstehend und/oder nachfolgend beschriebenen Beschichtungsgemisch beschichtet sein.

Ein weiterer Aspekt betrifft eine Batteriezelle. Die Batteriezelle kann zumindest eine Elektrode aufweisen. Die zumindest eine Elektrode kann wie vorstehend und/oder nachfolgend beschrieben ausgebildet und/oder hergestellt sein. Beispielsweise kann die Batteriezelle zwei Elektroden aufweisen, insbesondere eine Anode und eine Kathode. Zwischen den beiden Elektroden kann ein Separator angeordnet sein. Beispielsweise kann die Batteriezelle eine Lithium-Ionen-Batteriezelle sein. Unter einer Lithium-Zelle bzw. Lithium-Ionen-Batteriezelle kann insbesondere eine elektrochemische Zelle verstanden werden, an deren elektrochemischer Reaktion Lithium beteiligt ist. Beispielsweise kann eine Lithium-Zelle eine Lithium-Ionen-Zelle oder Lithium-Metall-Zelle sein.

Zusammenfassend und mit anderen Worten dargestellt ergibt sich somit durch die Erfindung unter anderem eine Anlage und ein Verfahren zur kontinuierlichen Entgasung von Batterieslurries, wie Lithium-Ionen-Batterie-Slurries. Durch eine Entgasung in Kombination mit einer Förderleistung (z.B. als Förderpumpenersatz) können sich verschiedene Szenarien ergeben. Die Einbindung der Entgasungseinrichtung, wie Entgaser, direkt hinter der Extrusionseinrichtung, wie z.B. dem Extruder, kann die Förderung des Beschichtungsgemischs / Slurries durch eine anschließende längere Rohrleitung durch die niedrigere Viskosität nach Entgasung begünstigen. Eine Einbindung direkt am Puffertank kann eine Entgasung mit gleichzeitiger Rezirklierung ermöglichen, um gleichzeitig Slurrysedimentation vorzubeugen. Eine Einbindung direkt vor der Beschichtungseinrichtung, wie dem Beschichter, kann gewährleisten, dass der Slurry bzw. das Beschichtungsgemisch vollständig entgast und/oder ohne Neueinbringung von Luft appliziert werden kann.

Mit der Erfindung kann eine kontinuierliche Entgasung direkt im Prozess ermöglicht werden. Die Entgasungsprozesszeit kann signifikant verkürzt werden. Ein im Wesentlichen blasenfreies Beschichtungsgemisch für eine Elektrode kann bereitgestellt werden, um insbesondere Gas- und/oder Luft-Einschlüsse in der Elektrodenbeschichtung und damit Fehlstellen auf der Elektrode zu vermeiden. Entgasungstanks können entfallen. Dadurch können Kosten und Raumbedarf eingespart werden. Ferner kann der Reinigungs- und/oder Wartungsaufwand reduziert werden.

Nachfolgend werden Ausführungsbeispiele der Erfindung unter Bezugnahme auf Figuren näher beschrieben, dabei zeigen schematisch und beispielhaft:
- Fig. 1: eine Anlage zur Herstellung eines homogenisierten Beschichtungsgemischs für eine Elektrode einer Batteriezelle;
- Fig. 2: eine Variante einer Anlage zur Herstellung eines homogenisierten Beschichtungsgemischs für eine Elektrode einer Batteriezelle; und
- Fig. 3: eine weitere Variante einer Anlage zur Herstellung eines homogenisierten Beschichtungsgemischs für eine Elektrode einer Batteriezelle.

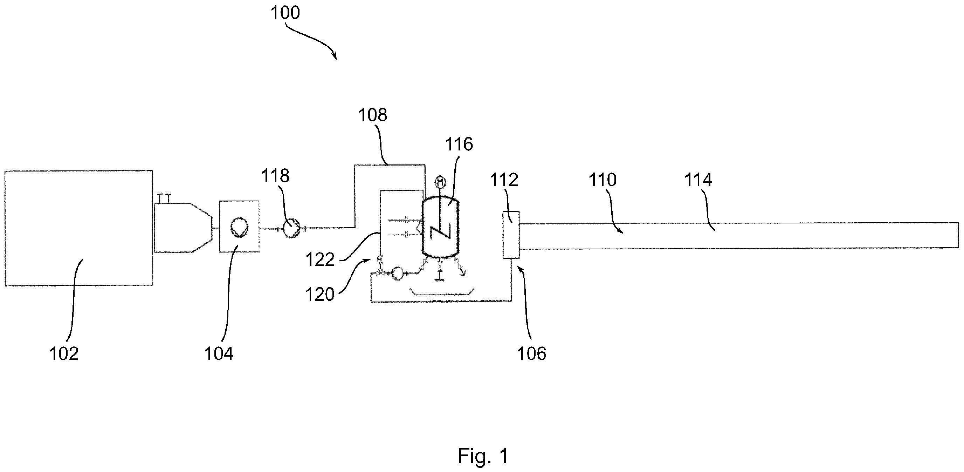

Fig. 1 zeigt eine Anlage 100 zur Herstellung eines homogenisierten Beschichtungsgemischs für eine Elektrode einer Batteriezelle. Beispielsweise kann es sich bei dem Beschichtungsgemisch um ein Anodenmaterial oder Kathodenmaterial für eine Anode bzw. Kathode der Batteriezelle handeln. Die Anlage 100 umfasst eine Extrusionseinrichtung 102, eine Entgasungseinrichtung 104 und eine Übergabestelle 106. Die Extrusionseinrichtung 102 ist zum Herstellen und Extrudieren des homogenen Beschichtungsgemischs ausgebildet und die Übergabestelle 106 ist zum Bereitstellen des von der Extrusionseinrichtung 102 homogenisierten und extrudierten Beschichtungsgemischs eingerichtet. Der Ausgang der Extrusionseinrichtung 102 ist über eine Förderleitung 108 mit der Übergabestelle 106 verbunden und die Entgasungseinrichtung 104 ist in die Förderleitung 108 wirksam eingebunden.

Die Entgasungseinrichtung 104 ist zum kontinuierlichen Entgasen des von der Extrusionseinrichtung 102 homogenisierten und extrudierten Beschichtungsgemischs ausgebildet. Vorzugsweise ist die Entgasungseinrichtung 104 eine Inline-Entgasungseinrichtung und/oder eine Vakuum-Entgasungseinrichtung.

Wie in Fig. 1 dargestellt, ist die Entgasungseinrichtung 104 der Extrusionseinrichtung 102 nachgeschaltet und der Übergabestelle 106 vorgeschaltet. Im vorliegenden Ausführungsbeispiel gemäß Fig. 1 ist die Entgasungseinrichtung 104 der Extrusionseinrichtung 102 unmittelbar nachgeschaltet und daher direkt nach dem Ausgang der Extrusionseinrichtung 102 angeordnet. Die Einbindung der Entgasungseinrichtung 104 direkt hinter der Extrusionseinrichtung 102 begünstigt die Förderung des Beschichtungsgemischs durch eine anschließende längere Förderleitung 108 aufgrund der niedrigeren Viskosität des Beschichtungsgemischs nach der Entgasung.

An der Übergabestelle 106 ist eine Beschichtungseinrichtung 110 zum Beschichten eines Trägermaterials mit dem bereitgestellten Beschichtungsgemischs angeschlossen. Das Trägermaterial ist ein Elektrodenmaterial für die Elektrode der Batteriezelle. Beispielsweise wird das Trägermaterial als Trägerfolie, insbesondere kontinuierlich, bereitgestellt und dann beschichtet. Hierzu weist die Beschichtungseinrichtung 110 einen Beschichtungskopf 112 und einen Beschichter 114 auf.

Ferner umfasst die Anlage 100 einen Puffertank 116, der zwischen der Extrusionseinrichtung 102 und der Übergabestelle 106 zum Zwischenspeichern des Beschichtungsgemischs vorgesehen ist. Im vorliegenden Ausführungsbeispiel ist der Puffertank 1 16 in die Förderleitung 108 zwischen der Entgasungseinrichtung 104 und der Übergabestelle 106 integriert. Ferner kann in der Förderleitung 108 zwischen der der Entgasungseinrichtung 104 und dem Puffertank 116 eine Förderpumpe 118 wirksam vorgesehen sein. Die Förderpumpe 118 kann zum gezielten Fördern des Beschichtungsgemischs in den Puffertank 116 dienen. An dem Puffertank 116 ist ein Rezirkulationskreislauf 120 mit einer Rückförderleitung 122 vorgesehen, die einen Ausgang des Puffertanks 116 mit einem Eingang des Puffertanks 116 verbindet und eine Rezirkulation des Beschichtungsgemischs ermöglicht. Zum Steuern der Rezirkulation können ein oder mehrere Ventile, das bzw. die dann entsprechend geöffnet oder geschlossen wird bzw. werden, und/oder eine Förderpumpe vorgesehen sein.

Die Anlage 100 ist ferner ausgebildet, den Durchsatz der Extrusionseinrichtung 102, der Entgasungseinrichtung 104 und der Übergabestelle 106 zu steuern. Hierzu ist die Entgasungseinrichtung 104 in ihrem Durchsatz steuerbar ausgebildet, beispielsweise durch Steuerung des Vakuums einer Vakuumprozesskammer der Entgasungseinrichtung 104. Beispielsweise ist die Anlage 100 ausgebildet, den Durchsatz der Entgasungseinrichtung 104 basierend auf dem Durchsatz der Extrusionseinrichtung 102 und/oder dem Durchsatz der Übergabestelle 106 zu steuern. Die Anlage 100 weist hierfür eine Steuereinrichtung (in Fig. 1 nicht dargestellt) auf. Diese kann beispielsweise die Steuereinrichtung der Extrusionseinrichtung 102 oder eine hiervon separate, zusätzliche Steuereinrichtung sein.

Nachfolgend ist das Verfahren zur Herstellung des homogenisierten Beschichtungsgemischs für die Elektrode einer Batteriezelle mittels der Anlage 100 beschrieben.

Zuerst werden die Komponenten des Beschichtungsgemischs der Extrusionseinrichtung 102 zugeführt. Mittels der Extrusionseinrichtung 102 werden die Komponenten zu dem Beschichtungsgemisch vermischt. Dabei kann zumindest ein Aktivmaterial, ein Binder und ein Lösungsmittel mittels der Extrusionseinrichtung zur Ausbildung des Beschichtungsgemischs vermischt werden. Das Beschichtungsgemisch wird dann homogenisiert und extrudiert.

Anschließend wird das extrudierte Beschichtungsgemisch der Entgasungseinrichtung 104 kontinuierlich zugeführt. Mittels der Entgasungseinrichtung 104 erfolgt eine kontinuierliche Entgasung des Beschichtungsgemischs. Im vorliegenden Ausführungsbeispiel gemäß Fig. 1 wird das Beschichtungsgemisch unmittelbar nach dem Extrudieren kontinuierlich entgast.

Das entgaste Beschichtungsgemischs wird dann in den Puffertank 116 gefördert. Der Puffertank 116 kann je nach Bedarf mit dem Rezirkulationskreislauf 120 betrieben werden, um beispielsweise Sedimentation im Puffertank 116 vorzubeugen.

Sodann wird das entgaste Beschichtungsgemischs an der Übergabestelle 106 bereitgestellt, um mittels der Beschichtungseinrichtung 110 eine Elektrode für eine Batteriezelle auszubilden.

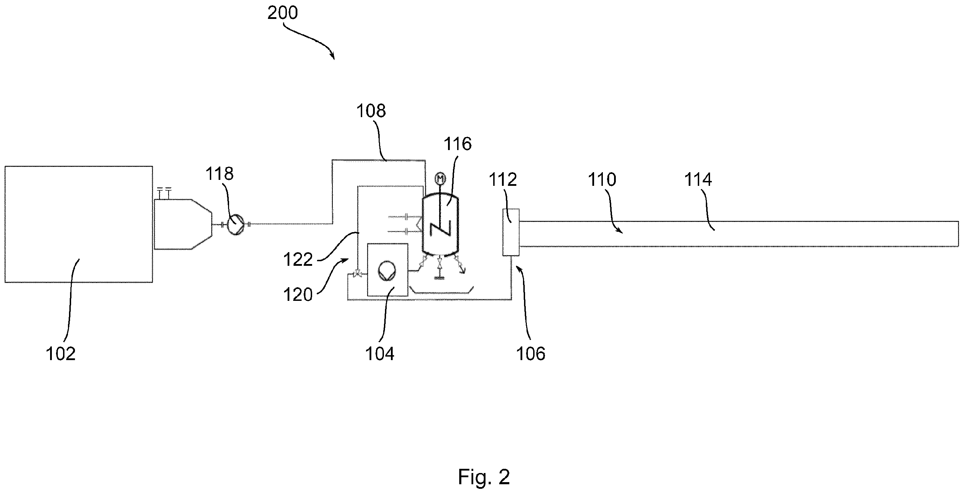

Fig. 2 zeigt eine Variante einer Anlage 200 zur Herstellung eines homogenisierten Beschichtungsgemischs für eine Elektrode einer Batteriezelle. Die Anlage 200 entspricht im Wesentlichen der Anlage 100 gemäß Fig. 1.

Im Unterschied zur Anlage 100 ist bei der Anlage 200 die Entgasungseinrichtung 104 dem Puffertank 116 unmittelbar nachgeschaltet. D.h., die Entgasungseinrichtung 104 ist direkt nach dem Puffertank 116 vorgesehen, sodass das Beschichtungsgemisch unmittelbar nach dem Puffertank 116 kontinuierlich entgast wird.

Im Vorliegenden Ausführungsbeispiel gemäß Fig. 2 ist die Entgasungseinrichtung 104 ferner in dem Rezirkulationskreislauf 120 integriert. Die Einbindung direkt nach dem Puffertank 116 ermöglicht eine Entgasung mit gleichzeitiger Rezirkulierung, um gleichzeitig einer Sedimentation des Beschichtungsgemischs im Puffertank 116 vorzubeugen.

Im Übrigen wird ergänzend insbesondere auf Fig. 1 und die zugehörige Beschreibung verwiesen.

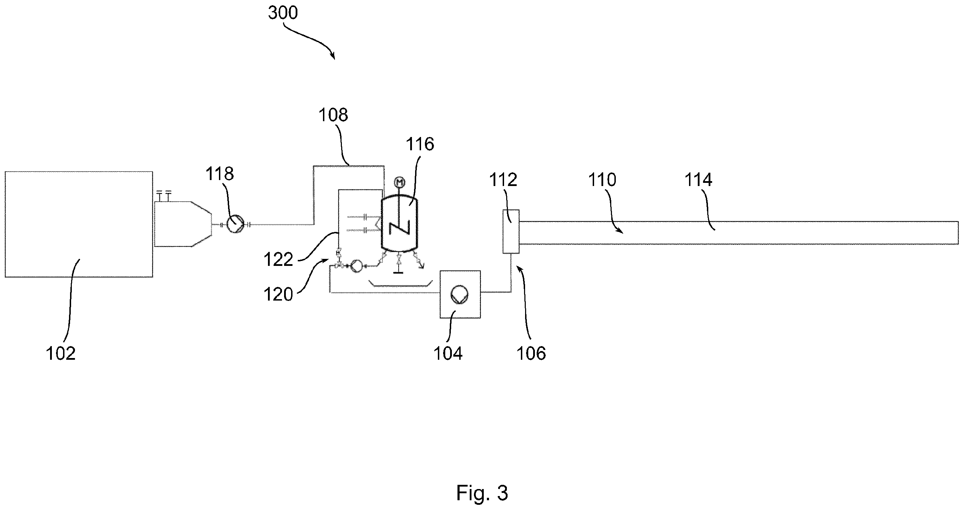

Fig. 3 zeigt eine weitere Variante einer Anlage 300 zur Herstellung eines homogenisierten Beschichtungsgemischs für eine Elektrode einer Batteriezelle. Die Anlage 300 entspricht im Wesentlichen der Anlage 100 gemäß Fig. 1.

Im Unterschied zur Anlage 100 ist bei der Anlage 300 die Entgasungseinrichtung 104 der Übergabestelle 106 unmittelbar vorgeschaltet. D.h., die Entgasungseinrichtung 104 ist direkt vor der Übergabestelle 106 vorgesehen, sodass das Beschichtungsgemisch unmittelbar vor dem Bereitstellen und damit direkt vor dem Beschichten kontinuierlich entgast wird.

Die Einbindung der Entgasungseinrichtung 104 direkt vor der Übergabestelle 106 bzw. direkt vor der Beschichtungseinrichtung 110 ermöglicht, dass das Beschichtungsgemisch vollständig entgast und/oder ohne Neueinbringung von Gas bzw. Luft appliziert werden kann.

Im Übrigen wird ergänzend insbesondere auf Fign. 1 und 2 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert werden.

### Bezugszeichen

- 100: Anlage zur Herstellung eines Beschichtungsgemischs
- 102: Extrusionseinrichtung
- 104: Entgasungseinrichtung
- 106: Übergabestelle
- 108: Förderleitung
- 110: Beschichtungseinrichtung
- 112: Beschichtungskopf
- 114: Beschichter
- 116: Puffertank
- 118: Förderpumpe
- 120: Rezirkulationskreislauf
- 122: Rückförderleitung
- 200: Anlage zur Herstellung eines Beschichtungsgemischs
- 300: Anlage zur Herstellung eines Beschichtungsgemischs

## Patentansprüche

1. Anlage (100, 200, 300) zur Herstellung eines homogenisierten Beschichtungsgemischs für eine Elektrode einer Batteriezelle, wobei die Anlage (100, 200, 300) umfasst:
- eine Extrusionseinrichtung (102) zum Herstellen des homogenen Beschichtungsgemischs;
- eine Übergabestelle (106) zum Bereitstellen des von der Extrusionseinrichtung (102) homogenisierten Beschichtungsgemischs; und
- eine der Extrusionseinrichtung (102) nachgeschaltete und der Übergabestelle (106) vorgeschaltete Entgasungseinrichtung (104), die zum kontinuierlichen Entgasen des von der Extrusionseinrichtung (102) homogenisierten Beschichtungsgemischs ausgebildet ist.

2. Anlage (100, 200, 300) nach Anspruch 1, **dadurch gekennzeichnet, dass** die Entgasungseinrichtung (104) eine Inline-Entgasungseinrichtung und/oder eine Vakuum-Entgasungseinrichtung ist.

3. Anlage (100, 200, 300) nach wenigstens einem der vorhergehenden Ansprüche, **dadurch gekennzeichnet, dass** der Ausgang der Extrusionseinrichtung (102) über eine Förderleitung (108) mit der Übergabestelle (106) verbunden ist, wobei die Entgasungseinrichtung (104) in die Förderleitung (108) wirksam eingebunden ist.

4. Anlage (100, 200, 300) nach wenigstens einem der vorhergehenden Ansprüche, **dadurch gekennzeichnet, dass** die Entgasungseinrichtung (104) der Extrusionseinrichtung (102) unmittelbar nachgeschaltet ist oder dass die Entgasungseinrichtung (104) der Übergabestelle (106) unmittelbar vorgeschaltet ist.

5. Anlage (100, 200, 300) nach wenigstens einem der vorhergehenden Ansprüche, **dadurch gekennzeichnet, dass** zwischen der Extrusionseinrichtung (102) und der Übergabestelle (106) ein Puffertank (116) zum Zwischenspeichern des Beschichtungsgemischs vorgesehen ist.

6. Anlage (100, 200, 300) nach Anspruch 5, **dadurch gekennzeichnet, dass** die Entgasungseinrichtung (104) dem Puffertank (116), insbesondere unmittelbar, vorgeschaltet oder, insbesondere unmittelbar, nachgeschaltet ist.

7. Anlage (100, 200, 300) nach wenigstens einem der vorhergehenden Ansprüche 5 bis 6, **dadurch gekennzeichnet, dass** an dem Puffertank (116) ein Rezirkulationskreislauf (120) vorgesehen ist, in dem die Entgasungseinrichtung (104) integriert ist.

8. Anlage (100, 200, 300) nach wenigstens einem der vorhergehenden Ansprüche, **dadurch gekennzeichnet, dass** die Anlage (100, 200, 300) ausgebildet ist, den Durchsatz der Extrusionseinrichtung (102), der Entgasungseinrichtung (104) und/oder der Übergabestelle (106) zu steuern, und/oder dass die Entgasungseinrichtung (104) in ihrem Durchsatz steuerbar ausgebildet ist.

9. Anlage (100, 200, 300) nach wenigstens einem der vorhergehenden Ansprüche, **dadurch gekennzeichnet, dass** die Anlage (100, 200, 300) ausgebildet ist, den Durchsatz der Entgasungseinrichtung (104) basierend auf dem Durchsatz der Extrusionseinrichtung (102) und/oder dem Durchsatz der Übergabestelle (106) zu steuern.

10. Verfahren zur Herstellung eines homogenisierten Beschichtungsgemischs für eine Elektrode einer Batteriezelle, wobei das Verfahren die Schritte umfasst:
- Homogenisieren und/oder Extrudieren des Beschichtungsgemischs mittels einer Extrusionseinrichtung (102);
- kontinuierliches Entgasen des homogenisierten und/oder extrudierten Beschichtungsgemischs mittels einer Entgasungseinrichtung (104); und
- Bereitstellen des entgasten Beschichtungsgemischs, insbesondere für die Ausbildung einer Elektrode.

11. Verfahren nach Anspruch 10, **dadurch gekennzeichnet, dass** das Beschichtungsgemisch ein Anodenmaterial oder Kathodenmaterial ist.

12. Verfahren nach Anspruch 10 oder 11, **gekennzeichnet durch** Vermischen zumindest eines Aktivmaterials, eines Binders und eines Lösungsmittels mittels der Extrusionseinrichtung (102) zum Herstellen des Beschichtungsgemischs.

13. Verfahren nach wenigstens einem der vorhergehenden Ansprüche 10 bis 12, **dadurch gekennzeichnet, dass** das Beschichtungsgemisch unmittelbar nach dem Extrudieren oder unmittelbar vor dem Bereitstellen entgast wird.

14. Verfahren nach wenigstens einem der vorhergehenden Ansprüche 10 bis 13, **dadurch gekennzeichnet, dass** das Beschichtungsgemisch unmittelbar nach einem Puffertank (116) entgast wird.

15. Beschichtungsgemisch für eine Elektrode einer Batteriezelle, wobei das Beschichtungsgemisch durch ein Verfahren nach wenigstens einem der vorhergehenden Ansprüche 10 bis 14 und/oder mittels einer Anlage (100, 200, 300) nach wenigstens einem der vorhergehenden Ansprüche 1 bis 9 hergestellt ist.

16. Elektrode, insbesondere Anode oder Kathode, für eine Batteriezelle, wobei die Elektrode ein mit dem Beschichtungsgemisch nach Anspruch 15 beschichtetes Trägermaterial aufweist.

17. Batteriezelle, insbesondere Lithium-Ionen-Batteriezelle, **gekennzeichnet durch** wenigstens eine Elektrode nach Anspruch 16.
